# EUROPÄISCHE PATENTSCHRIFT

(11) **EP 3 701 781 B1**
(45) Veröffentlichungstag und Bekanntmachung des Hinweises auf die Patenterteilung: **13.03.2024**
(21) Anmeldenummer: 20153794.1
(22) Anmeldetag: 27.01.2020
(51) Int. Cl.: A01D 34/13, A01D 34/14, A01F 29/09

(54) **EINSATZ AUS HARTMETALL FÜR EINE LANDWIRTSCHAFTLICHE VORRICHTUNG**
HARD METAL INSERT FOR AN AGRICULTURAL DEVICE
INSERT EN MÉTAL DUR POUR UN DISPOSITIF AGRICOLE

(30) Priorität: 26.02.2019 AT 501532019
(43) Veröffentlichungstag der Anmeldung: 02.09.2020
(73) Patentinhaber: Boehlerit GmbH & Co. KG., 8605 Kapfenberg (AT)
(72) Erfinder: Burböck, Hannes, 8652 Kindberg/Aumühl (AT); Sattler, Erhard, 8742 Obdach (AT); BÄRNTHALER, Walter, 8641 St. Marein im Mürztal (AT)
(74) Vertreter: Wirnsberger & Lerchbaum Patentanwälte OG

(56) Entgegenhaltungen:
- US-A- 513 834
- US-A1- 2014 069 249
- US-B1- 6 857 255

## Beschreibung

Die Erfindung betrifft einen Einsatz aus Hartmetall für eine landwirtschaftliche Vorrichtung, beispielsweise eine Hackschar oder eine Mähklinge, aufweisend schneidaktive Bereiche, welche in eine Schneidrichtung wirksam sind.

Aus der US 2014/069249 A1 ist ein Schneideinsatz bekannt aus Metall für eine landwirtschaftliche Vorrichtung, aufweisend schneidaktive Bereiche, welche in eine Schneidrichtung wirksam sind, wobei zwischen den schneidaktiven Bereichen zumindest teilweise Zähne vorgesehen sind, welche in Draufsicht über die schneidaktiven Bereiche vorragen.

Landwirtschaftliche Vorrichtungen sind für diverse Zwecke oftmals mit Schneiden ausgestattet. Die Schneiden können unterschiedliche Zwecke aufweisen, beispielsweise wie bei einer Grubberspitze, Erdreich in einer vorbestimmten Höhe zu durchtrennen, um den Boden aufbereitbar zu machen, aber auch Stroh zu häckseln, Ballen zu durchtrennen oder auf andere Weise einen Schnitt zu ermöglichen.

Die hierfür erforderlichen schneidaktiven Elemente wurden viele Jahrzehnte aus Stahl gefertigt. In jüngerer Zeit ist man dazu übergegangen, entsprechende Verschleißteile aus Stahl mit Hartmetall zu bestücken, um die Langlebigkeit um ein Vielfaches zu erhöhen. Zwar sind die Anschaffungskosten bei Weitem höher, allerdings rechnen sich diese höheren Anschaffungskosten dennoch über die Lebensdauer des Verschleißteiles. Normiert auf die Anschaffungskosten ist somit die Standzeit bei mit Hartmetall bestückten Verschleißteilen für landwirtschaftliche Vorrichtungen grundsätzlich höher.

Je nach Anwendungszweck wurden bereits verschiedene Lösungen vorgeschlagen, um einzelne landwirtschaftliche Vorrichtungen und Elemente hierfür, beispielsweise Pflugschar oder Hackmesser, individuell und an die Geometrie angepasst mit Hartmetall zu bestücken. Dies erfordert allerdings für jeden einzelnen Anwendungsbereich eine zu entwickelnde und der Geometrie des jeweiligen Verschleißteiles Rechnung tragende Anwendungsentwicklung. Darüber hinaus besteht ein Interesse, eine Standfestigkeit noch weiter zu erhöhen, um eine noch höhere Produktivität in Bezug auf die Lebensdauer eines schneidenden Verschleißelementes zu erreichen.

Aufgabe der Erfindung ist es, einen Einsatz der eingangs genannten Art derart weiterzuentwickeln, dass den vorstehenden Anforderungen Genüge geleistet ist.

Diese Aufgabe wird mit den Merkmalen des Anspruchs 1 gelöst.

Mit dieser Lösung wird ein Einsatz bereitgestellt, der beispielsweise auf einer Grubberspitze, einer Hackschar, einer Mähklinge oder auch anderen, gegebenenfalls Teil einer größeren Vorrichtung bildenden Komponente angeordnet werden kann. Dabei werden insbesondere zwei Vorteile erreicht: Zum einen sind Vorkehrungen getroffen, um weitgehend unabhängig von einem konkreten Einsatzzweck eine Langlebigkeit des Einsatzes zu maximieren. Die vorragenden Zähne dienen in diesem Zusammenhang dazu, beispielsweise Stöße durch Steine, festeres Erdreich oder allgemein harte Materialien aufzunehmen und damit die erst später eingreifenden, rückversetzten schneidaktiven Bereiche zu schützen. Trifft beispielsweise ein Stein auf einen oder mehrere Zähne, so unterliegen diese einem Verschleiß, nicht jedoch die erst später in Schneideingriff tretenden schneidaktiven Bereiche. Zum anderen ist ein derartiger Einsatz beispielsweise durch stoffschlüssige Verbindung an nahezu beliebigen Komponenten befestigbar, welche in der Landwirtschaft zum Schneiden benötigt werden. Dies reicht von der Bearbeitung von Erdreich bis hin zum Schneiden von Stroh. Es handelt sich somit quasi um einen Universaleinsatz, welcher einmal entwickelt für eine Vielzahl von Bearbeitungsgeräten in der Landwirtschaft eingesetzt werden kann. Dies ermöglicht auch eine effiziente und wenig intensive Bevorratung und Lagerung, was wiederum einen schnellen Ersatz ermöglicht.

Erfindungsgemäß ist vorgesehen, aus den zuvor erläuterten Gründen, dass in Draufsicht auf den Einsatz zumindest einzelne schneidaktive Bereiche vollständig hinter den benachbarten Zähnen liegen. Sind die schneidaktiven Bereiche vollständig hinter den Zähnen verlaufend angeordnet, können diese nicht durch hartes Material geschädigt werden.

Es kann vorgesehen sein, dass die Zähne in Bezug auf Schneidkanten der schneidaktiven Bereiche erhöht ausgebildet sind. Da die Zähne Stöße durch Steine oder allgemein harte Materialien aufnehmen sollen, unterliegen auch die Zähne einem Verschleiß, der nicht unerheblich ist. Dem wird durch eine erhöhte Ausbildung der Zähne Rechnung getragen, sodass an der Stirnseite des Einsatzes mit den verlaufenden schneidaktiven Bereichen einerseits und den Zähnen andererseits ein Materialüberschuss im Bereich der Zähne gegeben ist.

Die schneidaktiven Bereiche sind in der Regel zwischen den Zähnen angeordnet. Dessen ungeachtet können die Zähne auch selbst schneidaktiv sein, wenn diese mit entsprechenden Schneidkanten ausgebildet sind. Dies ist jedoch grundsätzlich nicht erforderlich, da die Zähne für einen anderen Zweck vorgesehen sind.

Die Anzahl der Zähne kann grundsätzlich beliebig sein. Üblicherweise sind zumindest drei Zähne vorgesehen, die schneidaktive Bereiche voneinander trennen. Der Abstand der Zähne ist dabei sowie im Allgemeinen so gewählt, dass zwei oder mehr Zähne einen Stoß aufnehmen können, beispielsweise den Stoß eines Steines. Die Zähne können dabei jeweils im gleichen Abstand voneinander angeordnet sein. Möglich ist es aber auch, für die Zähne unterschiedliche Abstände vorzusehen, die beispielsweise einem bestimmten Muster folgen können. Möglich ist es, abwechselnd kürzere und längere Abstände vorzusehen oder auch den Abstand der Zähne im Zentrum des Einsatzes anders als in den Randbereichen desselben zu gestalten.

Die schneidaktiven Bereiche sind rückversetzt, können dabei aber eine beliebige Kontur betreffend die Höhe aufweisen. Für viele Anwendungen ist es günstig, wenn die einzelnen schneidaktiven Bereiche in stirnseitiger Ansicht sich als Geraden darstellen, somit der gesamte schneidaktive Bereich auf einer Höhe liegt. Die verschiedenen schneidaktiven Bereiche liegen in stirnseitiger Ansicht jeweils auf gleicher Höhe, sodass sich gedanklich bei stirnseitiger Betrachtung eine nur durch die Zähne getrennte durchgehende Schneidlinie ergibt.

Der Einsatz ist aus einem Hartmetall gebildet, was nicht zwangsweise erfordert, dass dieser einteilig ausgebildet ist, wenngleich Letzteres herstellungstechnisch einfacher und daher bevorzugt ist.

Der Einsatz kann grundsätzlich aus einem beliebigen Hartmetall gebildet sein. Es hat sich jedoch gezeigt, dass Hartmetallsorten mit etwa 80 Gewichtsprozent (im Folgenden: Gew.%) bis 95 Gew.-% sowie einem Bindemetall, vorzugsweise Cobalt, im Ausmaß von 5 Gew.-% bis 15 Gew.-%, bevorzugt 7 Gew.-% bis 13 Gew.-%, insbesondere 8 Gew.-% bis 12 Gew.-% zweckmäßig sind, wobei das Wolframcarbid mit einer durchschnittlichen Korngröße im Bereich von etwa 1,5 µm bis 5 µm, insbesondere 2,0 µm bis 3,0 µm vorliegt. Entsprechende Hartmetallsorten haben sich als geeignet für Schneidleistungen im landwirtschaftlichen Bereich gezeigt. Es kann auch vorgesehen sein, dass der Einsatz beschichtet ist. Hierfür kommen Beschichtungen mittels CVD- oder PVD-Verfahren in Betracht. Bei den Beschichtungen kann es sich beispielsweise um Beschichtungen des Typs Al₁₋ₓTiₓN handeln. Entsprechende Beschichtungen können eine Schichtdicke von beispielsweise bis zu 15 µm aufweisen. Möglich sind auch Beschichtungen mit alternierenden Beschichtungslagen unterschiedlicher Zusammensetzungen.

Entsprechend den vorstehend dargelegten Vorteilen findet ein erfindungsgemäßer Einsatz bei einer landwirtschaftlichen Vorrichtung Anwendung. Bei der landwirtschaftlichen Vorrichtung kann es sich beispielsweise um ein Strohhäckselmesser, eine Mähklinge, ein Rübenköpfmesser, einen Hammerschlegel, ein Schlegelmesser, Messer für Ladewagen, Ballenpressen und Futtermischanlagen, eine Hackschar oder eine Scheibe für eine Scheibenegge handeln.

Weitere Merkmale, Vorteile und Wirkungen der Erfindung ergeben sich aus den nachstehend dargestellten Ausführungsbeispielen. In den Zeichnungen, auf welche dabei Bezug genommen wird, zeigen:
Fig. 1 einen erfindungsgemäßen Einsatz in Draufsicht;
Fig. 2 einen Teil einer stirnseitigen Ansicht des Einsatzes aus Fig. 1;
Fig. 3 eine vergrößerte Darstellung des Abschnittes III in Fig. 1;
Fig. 4 eine komplette stirnseitige Ansicht des Einsatzes aus Fig. 1;
Fig. 5 einen Schnitt entlang der Linie V-V in Fig. 1;
Fig. 6 einen Schnitt entlang der Linie VI-VI in Fig. 1;
Fig. 7 ein Strohhäckselmesser;
Fig. 8 eine Grubberschar;
Fig. 9 eine Scheibe für Scheibenegge;
Fig. 10 ein Messer für eine Ballenpresse.

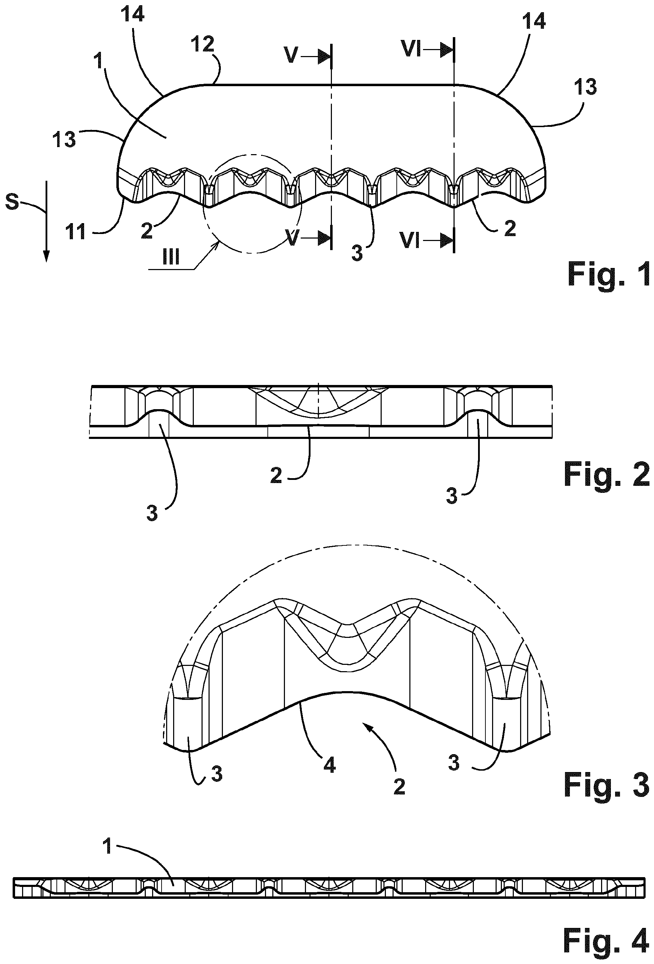

In Fig. 1 ist ein erfindungsgemäßer Einsatz 1 dargestellt. Der Einsatz 1 ist einteilig aufgebaut, wenngleich es auch möglich ist, dass der Einsatz 1 mit gleicher geometrischer Form aus mehreren Teilen zusammengesetzt ist. Beim Einsatz 1, aber auch im Allgemeinen ist es von Vorteil, wenn dieser einteilig ausgebildet ist.

Der Einsatz 1 ist aus einem Hartmetall gebildet. Bei einem Hartmetall kann es sich um ein gängiges Hartmetall handeln. Bevorzugt sind Sorten, welche etwa eine mittlere Größe aufweisen, also nicht in die klassische Definition eines Feinkornes fallen, aber auch nicht allzu grob sind. Für die Praxis hat es sich als insbesondere zweckmäßig erwiesen, wenn eine durchschnittliche Korngröße der Hartstoffpartikel, beispielsweise Wolframcarbid, im Bereich von 2.0 µm bis 3,0 µm liegt. Als Bindemetall kommt bevorzugt das üblicherweise verwendete Cobalt zum Einsatz, wenngleich auch Bindemetalle möglich sind, welche auf Nickel und/oder Eisen basieren. Auch Kombinationen dieser letzteren Metalle mit Cobalt sowie auch eine Kombination von Cobalt mit Nickel und Eisen als Bindemetall ist möglich. Üblicherweise liegt ein Anteil der Hartstoffpartikel wie Wolframcarbid im Bereich von 88 Gew.-% bis 95 Gew.-%, insbesondere etwa 88 Gew.-% bis 92 Gew.-%. Der Rest wird beispielsweise vom Bindemetall Cobalt umfasst. Möglich ist es selbstverständlich auch, dass zumindest ein Teil des Wolframcarbids durch andere Hartstoffpartikel, beispielsweise Titancarbid, ersetzt ist.

Der Einsatz 1 weist eine Stirnseite 11 und eine gegenüberliegende Rückseite 12 auf. Stirnseite 11 und Rückseite 12 sind in der in Fig. 1 ersichtlichen Draufsicht auf den Einsatz 1 durch Verbindungsseiten 13 miteinander verbunden. Am Übergang der Rückseite 12 in die Verbindungsseiten 13 sind Rundungen 14 vorgesehen, wenngleich die entsprechenden Übergänge auch eckig ausgebildet sein könnten. Die Rundungen 14 haben sich jedoch für die später noch zu erläuternde Befestigung des Einsatzes 1 in einer landwirtschaftlichen Vorrichtung oder einer Komponente hierfür als zweckdienlich erwiesen. An der Stirnseite 11 weist der Einsatz 1 in Draufsicht etwa eine Zick-Zack-Struktur auf. Die Zick-Zack-Struktur wird durch schneidaktive Bereiche 2 und Zähne 3 definiert. Die Zähne 3 sind grundsätzlich jeweils zwischen den schneidaktiven Bereichen 2 angeordnet. Die Zick-Zack-Struktur kann außenseitig auch durch weitere Zähne 3 abgeschlossen sein. In diesem Fall schließen an die äußersten, außenseitig angeordneten Zähne 3 keine weiteren schneidaktiven Bereiche an. In der in Fig. 1 dargestellten Ausführungsvariante ist jedoch jeder Zahn 3 jeweils von zwei benachbarten schneidaktiven Bereichen 2 umgeben.

Wie in der Draufsicht in Fig. 1 besonders deutlich ersichtlich ist, sind die schneidaktiven Bereiche 2 in Bezug auf die Zähne 3 rückversetzt angeordnet. Wird nunmehr Einsatz 1, befestigt auf einer landwirtschaftlichen Vorrichtung oder einer Komponente für eine landwirtschaftliche Vorrichtung, welche wiederum auf der landwirtschaftlichen Vorrichtung befestigt ist, in Richtung einer Schneidrichtung S wirksam bewegt, dienen die Zähne 3 quasi als Crashzonen, auf welche beispielsweise Steine auftreffen können, die allerdings nicht die schneidaktiven Bereiche 2 erreichen. Für diesen Zweck sind die Zähne 3 mit einem Abstand von einander von etwa 5 mm bis 25 mm, bevorzugt 6 mm bis 20 mm, angeordnet. Der konkrete Abstand richtet sich nach den erwarteten Belastungen bzw. den zu bearbeitenden Material und kann in Abhängigkeit von diesem eingestellt werden, beispielsweise zur Bearbeitung von Erdreich oder zum Schneiden von Stroh. Die Zähne 3 fangen somit auch allfällige Schläge ab, wodurch die schneidaktiven Bereiche 2 entsprechend geschützt sind.

Wie aus Fig. 2 in der stirnseitigen Ansicht ersichtlich ist, sind die versetzt zu einander angeordneten Zähne 3 in Bezug auf die schneidaktiven Bereiche 2 erhöht ausgebildet und sind somit als Materialverstärkung anzusehen. Diese Materialverstärkung der Zähne 3 trägt einem dualen Funktionsprinzip Rechnung: Während die schneidaktiven, rückversetzten Bereiche 2 möglichst lange ein Schneiden von Material ermöglichen sollen, sollen die Zähne 3 Schläge und andere grundsätzlich die Standzeit der schneidaktiven Bereiche herabsetzenden Störungen beseitigen. Durch diese Ausbildung des Einsatzes 1 kann eine sehr gute Standzeit erreicht werden. Da die Zähne 3 auch mit einer Erhöhung ausgebildet sind, beispielsweise einer Erhöhung bis zu 1 mm in Bezug auf die schneidaktiven Bereichen 2 als Grundlinie, können die Zähne 3 ohne Funktionsbeeinträchtigung relativ schmal gehalten werden. Üblicherweise ist die Breite der Zähne 3 entlang der Zick-Zack-Struktur (siehe Fig. 1 oder Fig. 2) weniger als 30 %, vorzugsweise weniger als 25 %, besonders bevorzugt weniger als 20 %, der Länge eines dazwischenliegenden schneidaktiven Bereiches 2.

Wie in Fig. 2 ersichtlich ist, ist der Einsatz 1 an der Stirnseite 11 hinsichtlich der Dicke zulaufend ausgebildet, was für eine gute Schneidwirkung zweckmäßig ist. Im daran anschließenden Bereich ist der Einsatz 1 mit konstanter Dicke ausgebildet. Aus Fig. 2 ist insbesondere auch die erhöhte Ausbildung der Zähne 3 in Bezug auf die schneidaktiven Bereiche 2 ersichtlich, was in Fig. 4 für eine komplette stirnseitige Ansicht nochmals dargestellt ist.

In Fig. 3 ist ein Ausschnitt III gemäß Fig. 1 dargestellt. Wie ersichtlich ist, ist der gezeigte schneidaktive Bereich 2, an welchen zwei Zähne 3 anschließen, im Wesentlichen v-förmig ausgebildet. Dabei kann es, wie dargestellt, zweckmäßig sein, allfällige Ecken durch Verrundungen zu vermeiden. Dadurch ist die Gefahr eines punktuellen Ausbrechens des Einsatzes 1 verringert, weil Spannungsspitzen reduziert sind. In Fig. 3 bildet der schneidaktive Bereich 2 Schneidkanten 4 aus, welche im Einsatz die eigentliche Schneidleistung erbringen.

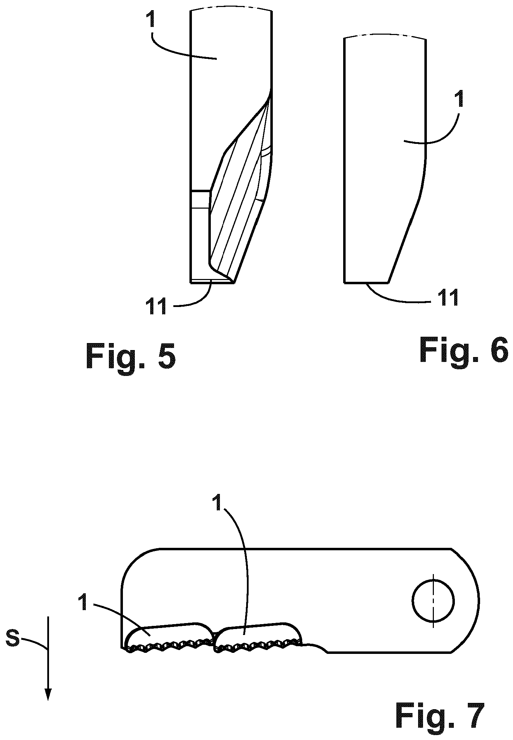

In Fig. 5 ist ein Schnitt entlang der Linie V-V in Fig. 1 gezeigt, in Fig. 6 ein entsprechender Schnitt entlang der Linie VI-VI, ebenfalls in Fig. 1. Anhand dieser Schnittdarstellungen wird nochmals ersichtlich, dass der Einsatz 1 an der Stirnseite 11 konisch zuläuft, wobei die Zähne 3 gegenüber den schneidaktiven Bereichen 2 mit einer Erhöhung bzw. mehr Material ausgebildet sind.

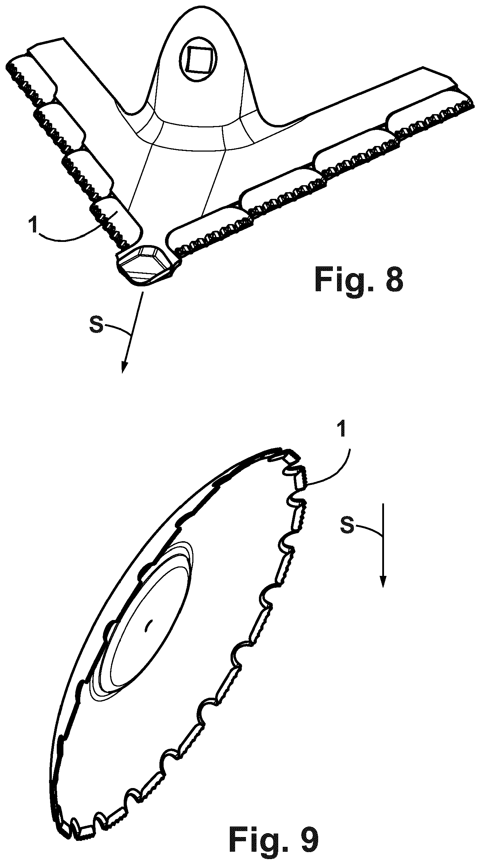

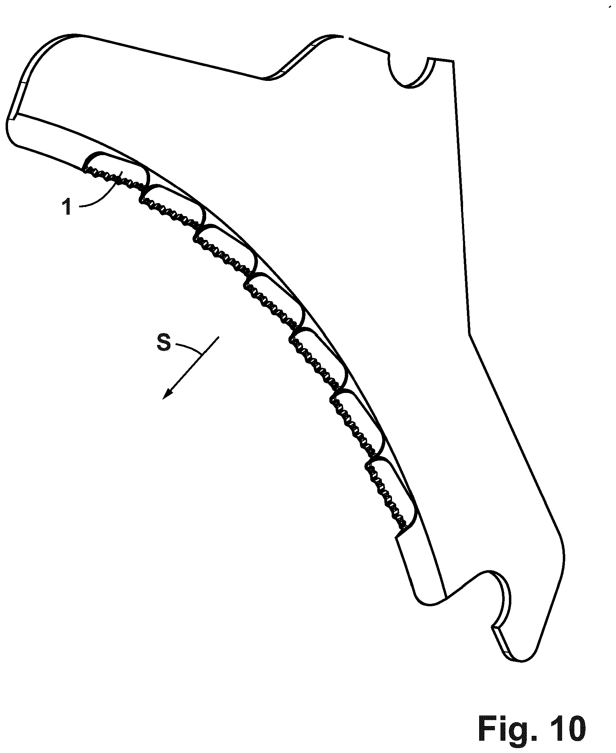

Ein erfindungsgemäßer Einsatz 1 kann in beliebigen Komponenten für landwirtschaftliche Vorrichtungen oder auch in diesen selbst eingesetzt werden, beispielsweise als Strohhäckselmesser, Mähklinge, Rübenköpfmesser, Hammerschlegel, Schlegelmesser, Messer für Ladewagen, Ballenpressen und/oder Futtermischanlagen, als Hackschar oder in einer Scheibe für Scheibeneggen. Nachstehend sind hierzu einige Ausführungsbeispiele gezeigt. Beispielsweise zeigt Fig. 7 ein Strohhäckselmesser, Fig. 8 einer Grubberschar, Fig. 9 eine Scheibe für eine Scheibenegge und Fig. 10 ein Messer für eine Ballenpresse. Allen Ausführungsbeispielen ist gemeinsam, dass ein erfindungsgemäßer Einsatz 1 zur Anwendung kommt. In den Ausführungsbeispielen ist, wenngleich dies nicht zwingend ist, jeweils eine Vielzahl von Einsätzen 1 vorgesehen, die in eine Schneidrichtung S wirksam sind. Die Einsätze 1 sind dabei üblicherweise mit einem Anstellwinkel relativ zu einer Basis des jeweiligen Werkzeuges von etwa 5° bis 25°, insbesondere 10° bis 20°, angestellt. Die Einsätze 1 können durch Löten auf den entsprechenden Komponenten bzw. Werkzeugen angebracht sein. Dabei ist es bevorzugt, dass der Einsatz 1 vom jeweils nächstfolgenden Einsatz 1 zumindest minimal beabstandet ist. Möglich ist es aber auch, dass die einzelnen Einsätze 1 aneinander anschließend bzw. einander berührend angeordnet sind. Besonders vorteilhaft ist es, unabhängig von der Art des Werkzeuges oder der Komponente, wenn zur Aufnahme eines oder mehrerer Einsätze 1 an diesen entsprechende Taschen vorgesehen sind, in welchen die Einsätze 1 eingesetzt werden. Eine Befestigung kann stoffschlüssig erfolgen, insbesondere durch Löten.

Ein wesentlicher Vorteil eines erfindungsgemäßen Einsatzes 1 liegt neben einer hohen Standzeit auch darin, dass, wie insbesondere auch aus den Ausführungsbeispielen gemäß Fig. 7 bis Fig. 10 ersichtlich ist, der Einsatz 1 in nahezu beliebigen landwirtschaftlichen Vorrichtungen oder Komponenten hierfür eingesetzt werden kann. Dies reduziert die Lagerhaltung erheblich, da immer die gleichen Teile Anwendung finden können.

## Patentansprüche

1. Einsatz (1) aus Hartmetall für eine landwirtschaftliche Vorrichtung, beispielsweise eine Hackschar oder eine Mähklinge, aufweisend schneidaktive Bereiche (2), welche in eine Schneidrichtung (S) wirksam sind, wobei zwischen den schneidaktiven Bereichen (2) zumindest teilweise Zähne (3) vorgesehen sind, welche in Draufsicht über die schneidaktiven Bereiche (2) vorragen, wobei die schneidaktiven Bereiche (2) in stirnseitiger Ansicht auf gleicher Höhe liegen.

2. Einsatz (1) nach Anspruch 1, **dadurch gekennzeichnet, dass** in Draufsicht zumindest einzelne schneidaktive Bereiche (2) vollständig hinter den benachbarten Zähnen (3) liegen.

3. Einsatz (1) nach Anspruch 1 oder 2, **dadurch gekennzeichnet, dass** die Zähne (3) in Bezug auf Schneidkanten (4) der schneidaktiven Bereiche (2) erhöht ausgebildet sind.

4. Einsatz (1) nach einem der Ansprüche 1 bis 3, **dadurch gekennzeichnet, dass** die schneidaktiven Bereiche (2) in Draufsicht mit etwa v-förmigem Verlauf ausgebildet sind.

5. Einsatz (1) nach einem der Ansprüche 1 bis 4, **dadurch gekennzeichnet, dass** zumindest drei Zähne (3) vorgesehen sind, die schneidaktive Bereiche (2) voneinander trennen.

6. Einsatz (1) nach einem der Ansprüche 1 bis 5, **dadurch gekennzeichnet, dass** der Einsatz (1) einteilig ausgebildet ist.

7. Einsatz (1) nach einem der Ansprüche 1 bis 6, **dadurch gekennzeichnet, dass** der Einsatz (1) beschichtet ist.

8. Landwirtschaftliche Vorrichtung mit einem Einsatz (1) nach einem der Ansprüche 1 bis 7.

## Claims

1. An insert (1) of hard metal for an agricultural implement, for example a chopping coulter or a mowing blade, comprising active cutting regions (2), which are active in a cutting implement (S) wherein between the active cutting regions (2) teeth (3) are at least partially provided, which in the plan view protrude over the active cutting regions (2), wherein the active cutting regions (2) in front-end view are situated at the same height.

2. The insert (1) according to claim 1, **characterised in that** in plan view at least individual active cutting regions (2) are completely situated behind the adjacent teeth (3).

3. The insert (1) according to claim 1 or 2, **characterised in that** the teeth (3), with respect to the cutting edges (4) of the active cutting regions (2), are configured elevated.

4. The insert (1) according to any one of the claim 1 to 3, **characterised in that** the active cutting regions (2), in the plan view, are configured so as to follow an approximately V-shaped course.

5. The insert (1) according to any one of the claims 1 to 4, **characterised in that** at least three teeth (3) are provided, which separate the active cutting regions (2) from one another.

6. The insert (1) according to any one of the claims 1 to 5, **characterised in that** the insert (1) is formed in one piece.

7. The insert (1) according to any one of the claims 1 to 6, **characterised in that** the insert (1) is coated.

8. An agricultural implement having an insert (1) according to any one of the claims 1 to 7.

## Revendications

1. Plaquette rapportée (1) en carbure pour un dispositif agricole, par exemple un soc de binage ou une lame de fauchage, comportant des zones actives de coupe (2), lesquelles sont efficaces dans une direction de coupe (S), sachant qu'au moins en partie des dents (3) sont prévues entre les zones actives de coupe (2), lesquelles, en vue de dessus, dépassent au-dessus des zones actives de coupe (2), sachant que les zones actives de coupe (2) se situent à la même hauteur en vue de face.

2. Plaquette rapportée (1) selon la revendication 1, **caractérisée en ce qu'**au moins des zones actives de coupe individuelles (2) se situent, en vue de dessus, complètement derrière les dents voisines (3) .

3. Plaquette rapportée (1) selon la revendication 1 ou 2, **caractérisée en ce que** les dents (3) sont constituées surélevées par rapport aux arêtes de coupe (4) des zones actives de coupe (2).

4. Plaquette rapportée (1) selon l'une quelconque des revendications 1 à 3, **caractérisée en ce que** les zones actives de coupe (2) sont constituées en vue de dessus avec un profil à peu près en forme de V.

5. Plaquette rapportée (1) selon l'une quelconque des revendications 1 à 4, **caractérisée en ce qu'**au moins trois dents (3) sont prévues, qui séparent l'une de l'autre les zones actives de coupe (2).

6. Plaquette rapportée (1) selon l'une quelconque des revendications 1 à 5, **caractérisée en ce que** la plaquette rapportée (1) est constituée en une seule pièce.

7. Plaquette rapportée (1) selon l'une quelconque des revendications 1 à 6, **caractérisée en ce que** la plaquette rapportée (1) est revêtue.

8. Dispositif agricole avec une plaquette rapportée (1) selon l'une quelconque des revendications 1 à 7.
